Europäisches Patentamt

European Patent Office

Office européen des brevets

(11) Veröffentlichungsnummer: **0 378 135**
**A1**

# EUROPÄISCHE PATENTANMELDUNG

(21) Anmeldenummer: **90100254.3**

(51) Int. Cl.5: **A23L 1/317**

(22) Anmeldetag: **08.01.90**

(30) Priorität: **11.01.89 DE 3900602**

(43) Veröffentlichungstag der Anmeldung:
**18.07.90 Patentblatt 90/29**

(84) Benannte Vertragsstaaten:
**AT BE CH DE DK ES FR GB GR IT LI LU NL SE**

(71) Anmelder: **KÖRBER AG**
**Kampchaussee 8-32 Postfach 80 04 60**
**D-2050 Hamburg 80(DE)**

(72) Erfinder: **Fiwek, Wolfgang, Dipl.-Ing.**
**Obere Lindenstrasse 2**
**D-2055 Wohltorf(DE)**
Erfinder: **Häfker, Thomas, Dipl.-Ing.**
**Heuweg 2b**
**D-2054 Geesthacht(DE)**

(54) **Verfahren zum Herstellen eines Eiweiss enthaltenden Lebensmittelprodukts und Lebensmittelprodukt.**

(57) Beschrieben wird ein Verfahren zum Herstellen eines Lebensmittelprodukts aus Eiweiß, insbesondere Fleisch, enthaltender Grundmasse, die in einer Form erhitzt wird und dabei an ihrer Oberfläche eine Eigenhaut bildet.

Das Verfahren besteht darin, daß die Grundmasse in eine erhitzte mit Polytetrafluoräthylen beschichtete Hohlform eingefüllt wird, daß in der Form die Eigenhaut gebildet wird und daß das mit der Eigenhaut umschlossene Lebensmittelprodukt aus der Form entfernt wird.

EP 0 378 135 A1

## Verfahren zum Herstellen eines Eiweiß enthaltenden Lebensmittelprodukts und Lebensmittelprodukt

Die Erfindung betrifft ein Verfahren zum Herstellen eines Lebensmittelprodukts aus Eiweiß, insbesondere Fleisch, enthaltender Grundmasse, die in einer Form erhitzt wird und dabei an ihrer Oberfläche eine Eigenhaut bildet.

Die Erfindung betrifft außerdem ein Lebensmittelprodukt aus Eiweiß, insbesondere Fleisch, enthaltender Grundmasse, das an seiner Oberfläche eine Eigenhaut aufweist.

Es ist ein Verfahren zum Herstellen von Würsten mit Eigenhaut, sogenannten hüllenlosen Würsten (Roh- oder Brühwürste) bekannt, bei dem Wurstmasse, sogenannter Brät, in Hohlformen gefüllt wird, die eine für Wasserdampf durchlässige Membrane enthalten. Diese von den Formen außen abgestützten schlauchförmigen Membranen werden nach dem Einfüllen des Bräts kontinuierlich erwärmt, um eine Rötung der Wurstmasse zu erreichen. Sodann werden die Membranhüllen kontinuierlich erhitzt, um durch Koagulation des Eiweißes an der Oberfläche eine Eigenhaut zu bilden. Danach wird die Wurst gekühlt und aus der Membran entfernt. Dieses Verfahren weist den Nachteil einer langen Behandlungszeit der Wurstmasse innerhalb der Membranen auf, so daß die Leistung einer entsprechenden Anlage relativ gering ist; eine Erhöhung der Leistung bedingt bei dem bekannten Verfahren eine sehr große Anzahl von Formen mit Membranhüllen, in denen die Wurstmasse gleichzeitig behandelt wird.

Die der Erfindung zugrundeliegende Aufgabe besteht darin, die Behandlungszeit einer eiweißhaltigen Grundmasse, z. B. einer Wurstmasse, bis zur Fertigstellung der Außenhaut, nach deren Bildung das Lebensmittelprodukt der Hohlform entnommen werden kann, klein zu halten, um die Leistung entsprecher Herstellanlagen zu erhöhen.

Gemäß der Erfindung wird dies dadurch erreicht, daß die Grundmasse in eine erhitzte Hohlform eingefüllt wird, daß in der Hohlform die Eigenhaut gebildet wird und daß das mit der Eigenhaut umschlossene Lebensmittelprodukt aus der Hohlform entfernt wird.

Die Bildung der Außenhaut in der heißen Hohlform erfolgt schockartig, also durch eine Art Thermoschock, bei Temperaturen der Hohlform zwischen 60 °C und 150 °C, bevorzugt zwischen 65 °C und 80 °C, z B. ca. 70 °C. Die Grundmasse verbleibt gemäß der Erfindung zwischen 40 Sekunden und 200 Sekunden bis zur Bildung einer Außenhaut in der erhitzten Hohlform. Ein bevorzugter Bereich liegt zwischen 95 Sekunden und 115 Sekunden. Bei einer Temperatur von ca. 70 °C kann eine Behandlungszeit von ca. 105 Sekunden bis zur Bildung der Außenhaut ausreichen. Danach kann schon das so gebildete ausreichend feste Lebensmittelprodukt der Hohlform entnommen und weiterverarbeitet werden. Die Hohlform wird danach wieder mit Grundmasse zur Formung eines neuen Produktes gefüllt. Das Einfüllen der Grundmasse in die Hohlform kann gemäß einer vorteilhaften Weiterbildung der Erfindung unter der Wirkung eines Vakuums erfolgen. Das Entfernen des Lebensmittelproduktes nach dem Erhitzungsvorgang aus der Hohlform wird dadurch erleichtert, daß die Hohlform mit einer geeigneten Kunststoffschicht mit glatter Oberfläche beschichtet ist. Als besonders vorteilhaft hat sich die Beschichtung mit Polytetrafluoräthylen (TEFLON) erwiesen, weil bei diesem Material das erhitzte Lebensmittelprodukt kaum oder gar nicht haftenbleibt.

Gemäß einer weiteren Ausgestaltung der Erfindung kann das gemäß den vorstehend geschilderten Verfahrensschritten gebildete Lebensmittelprodukt getrocknet werden, indem es einem Trocknungsgas, vorzugsweise trockener Heißluft, mit einer Temperatur zwischen 40 °C und 100 °C, vorzugsweise zwischen 60 °C und 70 °C, zum Trocknen der Oberfläche ausgesetzt wird. Bei der bevorzugten Trocknungstemperatur beträgt die Trocknungszeit etwa fünf bis zehn Minuten. Die Trocknung soll nur die Oberfläche abtrocknen, ohne daß Wärme in nennenswerter Größenordnung in den Innenbereich des Lebensmittelproduktes dringt. Dies wird durch die heiße Oberfläche des aus der erhitzten Form entnommenen Lebensmittelprodukts unterstützt.

Nach dem Trocknen kann bei Fleisch enthaltenden Produkten gemäß einer wichtigen Weiterbildung der Erfindung das sogenannte Röten erfolgen, bei dem die graue Farbe der Grundmasse durch einen thermischen Prozeß die gewünschte rötliche Farbe erhält. Hierzu wird gemäß der Erfindung das Produkt Feuchtluft mit einer relativen Feuchte zwischen 60 % und 90 % und einer Temperatur zwischen 30 °C und 50 °C ausgesetzt. Bevorzugte Werte der Luft sind eine relative Feuchte von ca. 70 % und ein Temperaturbereich zwischen 35 °C und 45 °C. Unter den bevorzugten Bedingungen benötigt das Röten ca. 30 bis 45 Minuten.

An diese Verfahrensschritte kann sich ein Räuchern anschließen, das mit Feuchtluft, die mit Rauch, vorzugsweise mit Holzrauch, vermischt wird, bewirkt wird. Die Feuchtluft kann eine relative Feuchte zwischen 60 % und 90 %, bevorzugt ca. 70 %, aufweisen; die Lufttemperatur kann zwischen 50 °C und 80 °C, bevorzugt zwischen 60 °C und 70 °C, gehalten werden. Bei der bevorzugten Temperatur beträgt die Räucherzeit je nach gewünschtem Räuchergrad zwischen fünfzehn und zwanzig Minuten.

An das Räuchern kann sich gemäß der Erfindung vorteilhaft ein Trocknungsvorgang anschließen, der vorzugsweise mit Heißluft mit einer Temperatur zwischen 40 °C und 100 °C, bevorzugt zwischen 60 °C und 70 °C, durchgeführt wird. An den Trocknungsvorgang kann sich gemäß der Erfindung vorteilhaft ein Garvorgang anschließen, der in Luft mit einer relativen Feuchte zwischen 60 % und 90 %, bevorzugt ca. 75 %, durchgeführt wird. Die Lufttemperatur kann dabei zwischen 50 °C und 90 °C, vorzugsweise zwischen 60 °C und 80 °C liegen. Dabei hat es sich als vorteilhaft herausgestellt, daß die Lufttemperatur während des Garverfahrens erhöht wird, beispielsweise um 20 °C. Bei der bevorzugten Anfangstemperatur von 60 °C kann die Lufttemperatur entsprechend innerhalb von dreißig bis fünfundvierzig Minuten auf die Endtemperatur von 80 °C erhöht werden.

Mit dem Garen ist das Lebensmittelprodukt, z. B. die Wurst, fertig. Es wird anschließend gekühlt, z. B. mittels einer Dusche aus Salzwasser mit einer Temperatur zwischen 0 und -15 °C, z. B. zwischen -8 und -10 °C. Nach dem Kühlen kann das Lebensmittelprodukt verpackt werden.

Die Grundmasse kann aus Wurstmasse bestehen, die Fleisch von warmblütigen oder kaltblütigen Tieren aufweist. Die Grundmasse kann auch pflanzliches Eiweiß enthalten.

Das Verfahren gemäß der Erfindung ist deshalb besonders vorteilhaft, weil die Belegungszeit der Hohlformen mit Grundmasse im Vergleich zu anderen Verfahren minimiert ist. In der Hohlform erfolgt nur die Bildung der Eigenhaut, während alle weiteren Behandlungsschritte außerhalb der Form durchgeführt werden, was die Behandlung sehr erleichtert. Infolge der Eigenhautbildung durch Thermoschock, der die Folge des Einfüllens der Grundmasse in die schon hocherwärmte Hohlform ist, kann die Zeit, während der die Grundmasse in der Hohlform verweilen muß, sehr klein gehalten werden.

Das eingangs genannte mit einer Eigenhaut versehene Lebensmittelprodukt ist dadurch gekennzeichnet, daß es gemäß dem vorbeschriebenen Verfahren oder einzelnen Verfahrensschritten tatsächlich hergestellt und dessen unmittelbares Erzeugnis ist.

Das Lebensmittelprodukt kann gemäß der Erfindung die Form einer Wurst haben.

Eine besonders vorteilhafte Weiterbildung der Erfindung besteht darin, daß das Lebensmittelprodukt eine von der klassischen Wurstform abweichende Form hat, z. B. die Form von Tier- oder Menschenfiguren, wie sie besonders von Kindern geschätzt werden, die dadurch zu besserem Essen angeregt werden können. Mit den klassischen Verfahren zur Wurstherstellung können derartige Formen nicht gebildet werden, da sie nicht mit einer Haut aus natürlichem oder künstlichem Darm wirtschaftlich versehen werden können.

## Ansprüche

1. Verfahren zum Herstellen eines Lebensmittelprodukts aus Eiweiß, insbesondere Fleisch, enthaltender Grundmasse, die in einer Form erhitzt wird und dabei an ihrer Oberfläche eine Eigenhaut bildet, dadurch gekennzeichnet, daß die Grundmasse in eine erhitzte Hohlform eingefüllt wird, daß in der Hohlform die Eigenhaut gebildet wird und daß das mit der Eigenhaut umschlossene Lebensmittelprodukt aus der Hohlform entfernt wird.

2. Verfahren nach Anspruch 1, dadurch gekennzeichnet, daß die vorzugsweise mit Polytretrafluoräthylen beschichtete Hohlform auf Temperaturen zwischen 60 °C und 150 °C erhitzt wird.

3. Verfahren nach Anspruch 2, dadurch gekennzeichnet, daß die Hohlform auf Temperaturen zwischen 65 °C und 80 °C, z.B. auf ca. 70 °C, erhitzt wird.

4. Verfahren nach Anspruch 1 und/oder 2, dadurch gekennzeichnet, daß die Grundmasse in der erhitzten Hohlform zwischen 40 Sekunden und 200 Sekunden zum Ausbilden der Eigenhaut verbleibt.

5. Verfahren nach Anspruch 4, dadurch gekennzeichnet, daß die Grundmasse in der erhitzten Hohlform zwischen 95 Sekunden und 115 Sekunden, bei einer Erhitzungstemperatur von ca. 70 °C ca. 105 Sekunden, verbleibt.

6. Verfahren nach einem oder mehreren der vorhergehenden Ansprüche, dadurch gekennzeichnet, daß die Grundmasse unter Vakuum in die Hohlform eingefüllt wird.

7. Verfahren nach einem oder mehreren der vorhergehenden Ansprüche, dadurch gekennzeichnet, daß das Lebensmittelprodukt aus der Hohlform entfernt und einem Trocknungsgas, vorzugsweise trockener Heißluft, mit einer Temperatur zwischen 40 °C und 100 °C, vorzugsweise 60 °C und 70 °C, zum Trocknen der Oberfläche ausgesetzt wird.

8. Verfahren nach einem oder mehreren der vorhergehenden Ansprüche, dadurch gekennzeichnet, daß das Lebensmittelprodukt, sofern es Fleisch enthält, zum Röten Feuchtluft mit einer relativen Feuchte zwischen 60 % und 90 %, vorzugsweise von ca. 70 %, bei einer Temperatur zwischen 30 °C und 50 °C, vorzugsweise zwischen 35 °C und 45 °C, ausgesetzt wird.

9. Verfahren nach einem oder mehreren der vorhergehenden Ansprüche, dadurch gekennzeichnet, daß das Lebensmittelprodukt zum Räuchern mit Holzrauch vermischter Feuchtluft mit einer relativen Feuchte zwischen 60 % und 90 %, vorzugsweise von ca. 70 % und einer Temperatur zwischen 50 °C und 80 °C, vorzugsweise zwischen 60 °C und 70 °C, ausgesetzt wird.

10. Verfahren nach einem oder mehreren der vorhergehenden Ansprüche, dadurch gekennzeichnet, daß das geräucherte Lebensmittelprodukt einem Trocknungsgas, vorzugsweise trockner Heißluft, mit einer Temperatur zwischen 40 °C und 100 °C, vorzugsweise zwischen 60 °C und 70 °C, zum Trocknen der Oberfläche ausgesetzt wird.

11. Verfahren nach einem oder mehreren der vorhergehenden Ansprüche, dadurch gekennzeichnet, daß das Lebensmittelprodukt zum Garen Feuchtluft mit einer relativen Feuchte zwischen 60 % und 90 %, vorzugsweise ca. 75 %, und einer Temperatur zwischen 50 °C und 90 °C, vorzugsweise zwischen 60 °C und 80 °C, ausgesetzt wird, wobei die Lufttemperatur von einem unteren Wert (z. B. ca. 60 °C) allmählich auf einen höheren Wert (z. B. ca. 80 °C) gesteigert wird.

12. Verfahren nach einem oder mehreren der vorhergehenden Ansprüche, dadurch gekennzeichnet, daß die Grundmasse in eine Hohlform gefüllt wird, in der sie die Gestalt einer Wurst annimmt.

13. Verfahren nach einem oder mehreren der Ansprüche 1 bis 11, dadurch gekennzeichnet, daß die Grundmasse in eine Hohlform gefüllt wird, in der sie die Gestalt einer von der üblichen Wurstform abweichenden Form erhält.

14. Eiweiß, insbesondere Fleisch, enthaltendes Lebensmittelprodukt, das mit einer Eigenhaut überzogen ist, dadurch gekennzeichnet, daß es durch das in einem oder mehreren der vorhergehenden Ansprüche beanspruchte Verfahren tatsächlich hergestellt und dessen unmittelbares Erzeugnis ist.

15. Lebensmittelprodukt nach Anspruch 14, dadurch gekennzeichnet, daß es die Form einer Wurst aufweist.

16. Lebensmittelprodukt nach Anspruch 14, dadurch gekennzeichnet, daß es eine Form aufweist, die von der Wurstform abweicht.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-2 746 680 (I.O.T. VANHATALO et al.) <br> * Seite 2, Absatz 2; Seite 4, Absatz 3 - Seite 5, Absatz 2; Seite 6, Absatz 3; Seite 7, Absatz 2, Anspruch 1 * <br><br>--- | 1,9 | A 23 L 1/317 |
| A | EP-A-0 099 716 (BP CHEMICALS LTD.) <br> * Ansprüche 1-10 * <br><br>--- | 1 | |
| X | DE-B-1 267 526 (SWIFT & COMPANY) <br> * Ansprüche 1-7 * <br><br>----- | 1 | |
| | | | **RECHERCHIERTE SACHGEBIETE (Int. Cl.5)** <br><br> A 23 L 1/00 |

Der vorliegende Recherchenbericht wurde für alle Patentansprüche erstellt

| Recherchenort | Abschlußdatum der Recherche | Prüfer |
|---|---|---|
| BERLIN | 22-03-1990 | SCHULTZE D |